Europäisches Patentamt

(19) European Patent Office

Office européen des brevets

(11) EP 0 831 304 A1

(12) EUROPEAN PATENT APPLICATION
published in accordance with Art. 158(3) EPC

(43) Date of publication:
25.03.1998 Bulletin 1998/13

(51) Int. Cl.⁶: $G01F\ 1/34$, $G01L\ 11/02$

(21) Application number: 96914466.6

(22) Date of filing: 08.05.1996

(86) International application number:
PCT/MD96/00004

(87) International publication number:
WO 96/36850 (21.11.1996 Gazette 1996/51)
(84) Designated Contracting States:
DE FR GB

(30) Priority: 15.05.1995 MD 950252

(71) Applicants:
• Borisochev, Viktor Georgievich
  Kaliningrad 236040 (RU)
• Buimistriuk, Grigory Iakovlevich
  Baltz 279200 (MD)
• GNUTOV, Gennady Gavrilovich
  Samara, 443099 (RU)

(72) Inventors:
• Borisochev, Viktor Georgievich
  Kaliningrad 236040 (RU)
• Buimistriuk, Grigory Iakovlevich
  Baltz 279200 (MD)
• GNUTOV, Gennady Gavrilovich
  Samara, 443099 (RU)

(74) Representative:
Ebbinghaus, Dieter, Dipl.-Ing. et al
Patentanwälte v. Füner, Ebbinghaus, Finck,
Mariahilfplatz 2 & 3
81541 München (DE)

(54) OPTO-ELECTRONIC FLOWMETER AND A METHOD OF MANUFACTURING THE ASSOCIATED DIFFERENTIAL PRESSURE SENSOR

(57) The opto-electronic flowmeter is intended for use in measuring the flow rate of gas, liquid or steam and can be used in control and measuring systems and flow measurement meters, primarily in household and communal systems. The opto-electronic flowmeter comprises a pipeline (1) with a built-in constricting device (2) in the form of an iris diaphragm (3), a step motor (4), a differential pressure sensor (8), a microprocessor (6), a digital display (12), a data calculator (7) with a smart credit card, a set of photoemitters (9), a set of photoreceptors (10) and a booster unit (11). The differential pressure sensor comprises multimode or monomode optical fibres with a small-mode constriction covered over with a silicone compound. The said constriction is formed when the differential pressure sensor is manufactured by heating and drawing the optical fibres. Heating is done using continuous monomode laser radiation which is expanded and focused along the optical fibres by two cylindrical mirrors. The heating temperature is kept constant by adjusting the focal plane of the second cylindrical mirror.

Fig. 2

EP 0 831 304 A1

## Description

The invention relates to instrumentation, in particular, to electronic flowmeters, comprising an optical-fibre differential pressure sensor and can be used in control and measurement systems and gas, liquid and steam flow measurement meters, primarily in household and communal systems.

From No. 1719944, USSR a flowmeter is known comprising a contractor, a differential pressure sensor with an optical radiation source, nematic liquid cristal, a photodetector, an amplifier and a digital indicator. Zero drift and common-mode interferences in the differential pressure sensor circuits having one output cause significant errors in the process of flow rate measurements. The ageing or variations in the power supply mode of operation lead to the optical source emissive power fall, that turns out in the significant systematic error of the flow rate measuring.

Another prior art embodiment (USA, No. 4918994) comprises a pipe, an adjustable restriction, a differential pressure sensor, an absolute pressure sensor, a gas temperature sensor, a restriction control unit connected with a step motor, a memory unit connected with a control unit, and a computing unit. The adjustable restriction provided with specific non-standard configuration of the restriction aperture and evident axis shift from a pipe axis lead to significant errors in gas consumption measurement. Zero drift and common-mode interferenced in the differential pressure circuit with one output cause significat errors in the flow rate measuring. The step motor is arranged inside the pipe, that does not allow to use such a flowmeter In small diameter pipes (i.e. less than 25mm in diameter), which are specific for municipal gas supply arrangements. This flowmeter does not dose out gas issues to a separate individual consumer, for example, according to prepayment.

Another prior art embodiment (EP No. 0234325) discloses a multimode optical fibre coupler and a method of manufacture thereof according to which a laser source of optical fibres heating is used. To stabilize thermal conditions, a ceramic member is used, the said member is provided with a slotlike notch envisaged especially for fibres fusion procedure. The ceramic member absorbs $CO_2$ - laser emission. Since the quartz fusion point is approximately 2100°C, the temperature of the ceramic member should not be less. In the process of the ceramic member heating the effect of a surface thermal deformation is observed which follows by partial sublimation of material. Some of the sublimated particles deposit on the fibres and hising into the surface layer of the forming biconical construction giving rise to inhomogeneities which lead to higher intensity of optical noises, inserting attenuation and degradation of biconical coupler reliability.

This method is considered to be unfit for the manufacture of differential pressure sensors.

Another method of the prior art with respect to differential pressure sensor manufacturing is known from D.W.Gerdt 《《Application of fiber optic coupler sensors》》, SPIE, Vol. 990, Chemical, Biochemical and Environmental Applications of Fibers, 1988, 142-152).

The method describes the formation of a small-mode constriction from optical fibers which are heated by means of an electric-arc source, and then subjected to tension. After that, the obtained taper is encapsulated in silicone compaund and the latter is polymerized. The application of an electric-arc heating source causes the sublimation of the material therein and further fusion of its particles into the surface layer of the biconical constriction (the so-called termophoresis effect), that stipulates the formation of additional inhomogeneities the increasing of noise level, and by virtue of the particles abrazive effect, leads to the reduction of sensor accuracy (the constriction is 10 μm in diameter). The significat thermal gradients at heating zone bounds which are brought about by the process of fusion cause the transformation of quartzous glass into 《《hardened》》 one characterized by a highly increased friability that degrades the differential pressure sensor relialility.

It is accordingly one of the objects of the invention to provide a reliable optoelectronic flowmeter which is adapted for metering the supplied resources (e.g. gas, liquid, vapour) for an individual consumer with uprated accuracy).

Another object of the invention is to provide a fibre optical differential pressure sensor for the optoelectronic flowmeter which is so constructed that it would be possible to avoid inhomogeneities within the limits of forming the constriction zone. The absense of inhomogeneities improves the strength and reability of the sensor and increases signal-to-noise parameter that leads to higher functional accuracy.

Still another object of the invention is to provide an improved optoelectronic flowmeter comprising a pipeline, with a built-in construction device, a step motor mechanically connected with an appointed adjustable construction, a differential pressure sensor, the inputs whereof are connected to the pipeline on both sides of an adjustable construction, a microprocessor coupled with the differential pressure sensor and the step motor, and a data display unit connected with the microprocessor that optionally comprises a set of photoemitters, a set of photoreceptors and a booster unit; the differential pressure sensor inputs being connected to the set of photoemitters, which optical outputs are connected to the photoreceptor inputs, which outputs, in its turn, are coupled with the booster unit and the outputs thereof together with a set of photoemitters input are connected to the control unit, while the differential pressure sensor comprises multimode or monomode optical fibres with a small-mode constriction.

Still another object of the invention is provide a constricting device in the form of an iris diaphragm, a microprocessor functioning as a control unit and a data display unit. To provide the possibility of reading out data from a smart credit card, microprocessor is connected with a data calculator.

Still another object of the invention is to provide the method of a differential pressure manufacture comprising the small-mode constriction formation on the base of optical fibres endure tensions while being heated, and then the fabricated collstriction is encapsuled in a silicon compound with further polymerization. The novelty of the given method resides in that in the process of small-mode constriction formation optical fibres are heated by continious monomode laser radiation, which preliminary has been expanded by means of a cylindrical mirror being focused along the optical fibres by means of the second cylindrical mirror. The heating temperature of optical fibers is sustained constant in the process of their tension by keeping the second mirror focal plane in adjustment.

The optoelectronic flowmeter design ensures the possibility to obtain complete data for estimation the commercial volume of the resource. There is no necessity to use separate sensors to detect absolute pressure and temperature of resource (gas, liquid, vapour). The application of the iris diaphragm as a constricting device gives the opportunity to decrease the error of resource flowrate measuring since the form of a constriction aperture is symmetric about its own axis and the aperture axis coinsides with a pipeline axis. All the abovementioned promotes higher accuracy and reliability of the flowmeter. The application of the iris diaphragm gives a chance to dispose the step motor on the outer surface of the pipeline, and that, in its turn, gives the possibility to apply the flowmeter in the pipes of small diameter, that significantly expands the sphere of optoelectronic flowmeters application.

The exploitation of the differential pressure sensor made from multimode optical fibres provided with a small-mode construction makes it possible to increase the optical beam insertion efficiency. The situation tends to the following advantages: the most significant segment of optical emission energy passing through a constriction is reprezented mostly by cladding modes; energy distribution zone between output channels is expanded; the reduction of inhomogeneities relative dimensions is observed; the signal-to-noise parameter is raised as well as the accuracy of measurements.

Besides, this design ruggedizes the differential pressure sensor.

The optical fibres fusion in the process of heating by continious monomode laser radiation under the constant heading temperature in the process of fibre tension provides such fusion conditions under which the quartzous core of optical fibre does not change its mechanical and optical properties that enables to obtain the mechanically resistant small-mode constriction making it possible to increase the operating reliability of the sensor. Laser radiation expansion let the construction to be formed more extended, and, hence, to provide a more sensitive differential pressure sensor which improves the measurement accuracy.

The embodiment is hereinafter more fully described with reference to the accompanying drawings, wherein:

FIGURE 1 is a functional diagram of the optoelectronic flowmeter.

FIGURE 2 is a functional diagram of the device providing the fiber optic differential pressure sensor manufacture.

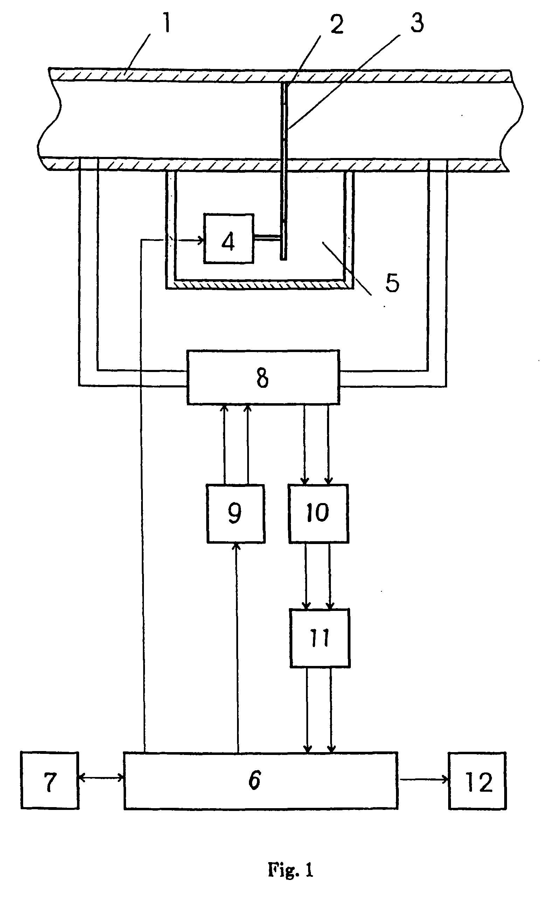

In the embodiment of the invention choosen for the purpose of illustration there is shown (Fig. 1) a pipeline 1, a built-in constricting device 2 in the form of an iris diaphragm provided with an adjustable aperture 3 mechanically connected with a step motor 4 disposed in a hermetically sealed chamber 5 which is coupled with a microprocessor 6, a data calculator 7 with a smart credit card connected with one of the inputs of a microprocessor 6, a differential pressure sensor 8 comprissing multimode optical fibers with a small-mode constriction, the inputs whereof are connected with a set of photoemitters 9, and the outputs whereof are connected with a set of photoreceptors 10, and the outputs of said photoreceptors are connected with the inputs of a booster unit 11, and the outputs whereof are connected to the microprocessor 6 connected with a digital display 12.

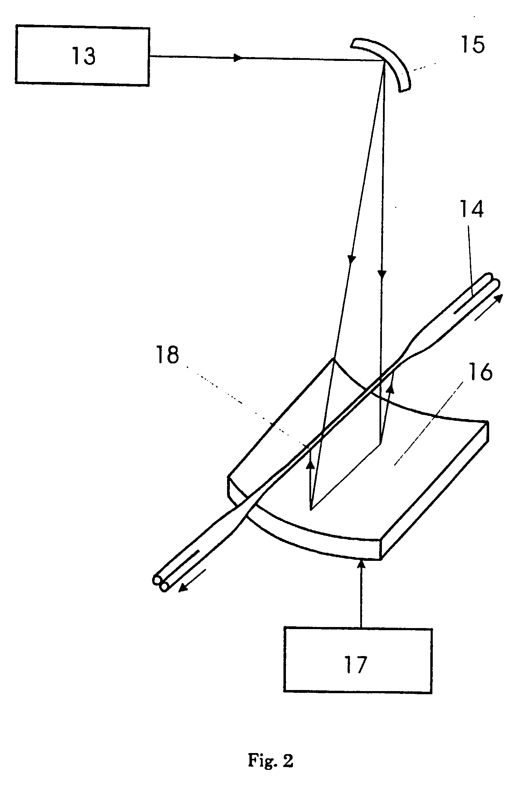

One of the embodiments of an invention, shown on Figure 2, illustrates the method of manufacture of a differential pressure device. The device comprises a monomode laser 13, the operating wavelength whereof is effectively absorbed by the optical fibre material 14, and a cylindrical mirror 15. The optical fibres 14 are disposed along a cylindrical mirror 16 axis in its focal plane. The cylindrical mirror 16 is connected wit!, an adjusting unit 17. The small-mode constriction 18 is formed by means of the above mentioned device.

The preferred embodiment of the opto-electronic flowmeter operates in the following way. In its initial position the constricting device 2 cuts the pipeline 1 off; the differential pressure sensor 8 estimates the excessive pressure in a pipe 1, the data being memorized and storaged in the microprocessor 6. A consumer utilizing his smart credit card by means of the data calculator cashes a definite resource volume (e.g. gas), and then the microprocessor 6 generates a signal to the step motor 4 enabling to uncover the constricting device 2 up to the nominal size of aperture 3. In the process of resource consumption the pressure differential is observed in the area of the constriction device. This pressure differential is converted by means of the differential pressure sensor 8, the set of photoemitters 9 and the booster unit 11 into output electric signals coming into the microprocessor 6, to be further converted into the value proportional to the normalized difference according to the following relationship:

$$W = (U_1 - U_2) / (U_1 + U_2) \qquad (1)$$

where $U_1$, $U_2$ are the signals at the output of the booster unit.

The normalized difference W is directly proportional to the pressure difference. On the basis of the data received the microprocessor 6 calculates the volume resource consumption (gas, liquid, vapour):

$$V_i = K\sqrt{W} + V_{i-1} \qquad (2)$$

where :

K is a calibrated constant, i = 1,2,3..., N is the steps of measurement,
$V_i$ is a volume consumption value on the i-step of measurement.

The temperature compensation of the volume resource consumption (gas) is carried out by indirect estimation of gas temperature, i.e. by time sequential measurement of normalized difference for various wavelengths $W\lambda_1$ and $W\lambda_2$ taking turns in switching red and infra-red optical photoemitters 9. The difference $\Delta W = W\lambda_1 - W\lambda_2$, calculated by the microprocessor 6 is proportional to the gas temperature from its normal value 20° that gives the opportunity to calculate the gas temperature T by means of the microprocessor (6) and, accordingly, to calculate the value of commercial volume consumption:

$$V_{20} = 2,8924 \times (p/T) \times V, \qquad (3)$$

where:

V is gas volume (m³) calculated at operating conditions;
p is absolute gas pressure in kPa calculated under conditions of constriction cutting off;
T is gas temperature in Kelvin's scale;
$V_{20}$ is commercial gas volume (m³) transferred to 20°C (293°K) and atmospheric pressure equal to 101,3 kPa. The wide range of flow rate is provided by varyinthe aperture 3 diameter keeping the pressure differential within the given limits $\Delta P$.

Thus, by means of the constriction adjustable iris diaphragm and heterospectral optical measurement of pressure difference, there is no necessity to use separate absolute pressure and temperature sensors.

Now in order that the invention may be clearly understood an embodiment thereof is by way of the method of the differential pressure sensor manufacture hereafter more fully described wit!, reference to Figure 2. Referring now to the said drawing the device comprises multimode or monomode optical fibres 14, provided for the small-mode constriction 18 formation in the differential pressure sensor 8, which are disposed on the cylindrical mirror 16 axis. By means of the monomode laser 13 and the cylindrical mirrors 15, 16 disposed orthogonally, it is possible to form the expanded zone for heating the optical fibres 14 with a smooth profile of temperature fieled that guarantees the condition of uniform heating in the process of optical fibres 14 fusion. The dimensions and temperature of the heating zone in the process of optical fibres fusion is controled by the adjustment unit 17 of the cylindrical mirror 16. Within the exposed to radiation area optical fibres 14 are heated up to the opalescence temperature, and, by adjusting the mirror 16, the temperature is kept constant during the process of fibres tension that leads to a small-mode constriction 18 formation.

Since the monomode laser beam has the Gaussian distribution of energy, a smooth fall of the temperature field within the heating zones is observed, that helps to avoid the formation of mechanical stresses in optical fibres 14 of the differential pressure sensor.

The signal-to-noise ratio of the differential pressure sensor, comprising multimode optical fibres, is higher in comparison with a monomode design. Such an effect is caused by that the optical emission power level introduced into the differential pressure sensor 8 is significantly higher in comparison with the power level of optical noises produced by inhomogeneities and re-reflections in the area of small-mode constriction 18. Other basic parameters of the differential pressure sensoe 8 comprising multimode optical fibres, in particular, sensitivity and accuracy, correspond to the similar parameters of the monomode differential pressure sensor, since in the process of its production by means of laser heating a single-mode constriction is formed.

Performing the new operations in the process of manufacturing of the small-mode constriction 18 by means of omnidirectional and uniform lazer heating of multimode optical fibres and stabilization of fusion zone temperature gives the opportunity, unlike the electric-arc heating of optical fibres, to improve the mechanical strength of the sensitive zone, i.e. the small-mode constriction 18, and therefore, the reliability of the differential pressure sensor 8. The prior art methodology of biconocal coupler manufacturing has never accounted the field of application, the pecularities of operation of a differential pressure sensor and flowmeters employed with significant pressure differentials. The novelty of the method of manufacture of a differential pressure sensor comprising monomode and multimode optical fibres lies in that it does take into account the field of application and promote to optimize a differential pressure sensor and flowmeters manufacture with higher operational reliability.

**Claims**

1. Optoelectronic flowmeter comprising a pipeline with a built-in adjustable constriction, a step motor mechanically connected with said adjustable constriction, a differential pressure sensor the inputs whereof are joined with the pipeline on both sides of said adjustable constriction, a microprocessor connected with the differential pressure sensor and the step motor, a digital display connected with the microprocessor, characterized in that further comprises a set of photoemitters (9), a set of photoreceptors (10) and a booster unit (11), and the optical inputs of the differential pressure sensor (8) are connected with the set of photoemitters (9), and the optical outputs thereof are connected with the inputs of the set of photoreceptors (10), the inputs thereof are connected with the booster unit (11), and the outputs thereof and the input of the set of photoemitters (9) are connected with the microprocessor (6), and the differential pressure sensor is formed of multimode and monomode optical fibres.

2. Optoelectronic flowmeter, according to Claim 1, wherein the adjustable constriction 2 is formed as an iris diaphragm.

3. Optoelectronic flowmeter, according to Claim 1, wherein the step motor is mounted in the hermetically sealed chamber 5 disposed at the outer surface of the pipeline 1.

4. Optoelectronic flowmeter, according to Claim 1, wherein the microprocessor 6 is implemented as a control unit.

5. Optoelectronic flowmeter, according to Claim 1, wherein the digital display 12 is coupled with the microprocessor 6.

6. Optoelectronic flowmeter, according to Claim 1, wherein it further comprises the data calculator (7) and the smart credit card.

7. Method for manufacturing the differential pressure sensor comprising the small-mode constriction being shaped on the base of optical fibres in the process of heating and drawing thereof, and the constriction obtained being encapculed in a silicon compound with further polymerization, characterized by that the small-mode constriction 18 is formed by the optical fibres (14) being heated using continious monomode lazer radiation which is expanded primarily by the cylindrical mirror (15) and focused along the optical fibres by the second cylindrical mirror (16), while the heating temperature of the optical fibres is kept constant in the process of drawing by adjusting the focal plane of the second cylindrical mirror.

Fig. 1

Fig. 2

# EP 0 831 304 A1

## INTERNATIONAL SEARCH REPORT

| | |
|---|---|
| | International application No. |
| | PCT/MD 96/00004 |

### A. CLASSIFICATION OF SUBJECT MATTER

IPC$^6$   G01F 1/34, G01L 11/02

According to International Patent Classification (IPC) or to both national classification and IPC

### B. FIELDS SEARCHED

Minimum documentation searched (classification system followed by classification symbols)

IPC$^6$   $^6$G01F 1/05, 1/34, G01L 11/00, 11/02, G02B 6/24 - 6/28, 6/42

Documentation searched other than minimum documentation to the extent that such documents are included in the fields searched

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | GB, A, 2115548 (NV PHILIPS GLOEILAMPENFABRIEKEN) 07 September 1983 (07.09.83) | 1-6 |
| A | DE, A1, 3341845 (PHILIPS PATENTVERWALTUNG Gmbh) 30 May 1985 (30.05.85) | 1-6 |
| A | SU, A1, 1345077 (UFIMSKY AVIATSIONNY INSTITUT) 15 October 1987 (15.10.87) | 1-6 |
| A | US, A, 3026727 (INTERNATIONAL ELECTRONIC RESEARCH CORP.), 27 March 1962 (27.03.62) | 1-2 |
| A | GB, A, 2201511 (BICC PUBLIC LIMITED COMPANY), 01 September 1988 (01.09.88) | 1,4 |
| A | EP, A3, 0234325 (ALLIED CORPORATION), 02 September 1987 (02.09,87), the abstract | 7 |
| A | GB, A, 2176626 (THE GENERAL ELECTRIC COMPANY p.l.c.), 31 December 1986 (31.12.86), the abstract | 7 |

| [X] | Further documents are listed in the continuation of Box C. | [ ] | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 07 August 1996 (07.08.96) | 14 August 1996 (14.08.96) |

| Name and mailing address of the ISA/ RU | Authorized officer |
|---|---|
| | |
| Facsimile No. | Telephone No. |

Form PCT/ISA/210 (second sheet) (July 1992)

8